# EUROPÄISCHE PATENTSCHRIFT

(11) **EP 0 570 800 B1**
(45) Veröffentlichungstag und Bekanntmachung des Hinweises auf die Patenterteilung: **23.09.1998**
(21) Anmeldenummer: 93107561.8
(22) Anmeldetag: 10.05.1993
(51) Int. Cl.: C09B 57/12, C08K 5/3465

(54) **Neue Perinonfarbstoffe zum Massefärben von Kunststoffen**
New perinone dyes for the bulk dyeing of synthetic materials
Nouveaux colorants périnoniques pour la teinture dans la masse de matières synthétiques

(30) Priorität: 21.05.1992 DE 4216761
(43) Veröffentlichungstag der Anmeldung: 24.11.1993
(73) Patentinhaber: BAYER AG, 51368 Leverkusen (DE)
(72) Erfinder: Roschger, Peter, Dr., W-5000 Köln 80 (DE)

(56) Entgegenhaltungen:
- FR-A- 1 075 110
- GB-A- 1 037 377
- DATABASE WPI Week 7437, Derwent Publications Ltd., London, GB; AN 74-65134V[37] 'Phthaloperinone pigments preparation' & JP-A-49 009 552 (MITSUBISHI CHEM. IND. CO.) 28. Januar 1974

## Beschreibung

Die Erfindung betrifft Perinonfarbstoffe, ein Verfahren zu ihrer Herstellung und ihre Verwendung zum Massefärben von Kunststoffen.

Perinonfarbstoffe, wie sie z.B. als 2,3-Naphthaloperinone in JP-A-4 909 530 und JP-A-4 909 552 oder als 1,8-Naphthaloperinone in FR-A-1.166.701 und FR-A-1.075.110 (≅ GB-A-730 692) beschrieben sind, sind zum Färben von Kunststoffen bekannt, weisen aber im Hinblick auf deren Echtheiten gewisse Nachteile auf.

Nun wurden 1,2-Naphthaloperinonfarbstoffe der allgemeinen Formel (I) gefunden 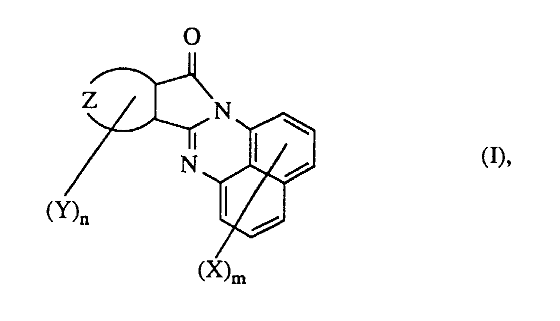 worin
- Z: ein Rest zur Vervollständigung eines 1,2-Naphthylensystems ist,
- X: C₁-C₆-Alkyl, Halogen, Nitro, Chlorsulfonyl, Aryloxysulfonyl, Hydroxy, Alkoxy, Acyloxy, ein gegebenenfalls durch Alkyl oder Aryl substituiertes Aminosulfonyl, oder ein ankondensierter cycloaliphatischer oder heterocyclischer Ring ist,
- Y: C₁-C₆-Alkyl, Aryl, Halogen, Nitro, Hydroxy, Alkoxy, Acyloxy, Chlorsulfonyl, Aryloxysulfonyl, eine gegebenenfalls durch Acyl oder Alkyl substituierte Aminogruppe, ein gegebenenfalls durch Alkyl oder aryl substituierter Aminosulfonylrest oder ein ankondensierter cycloaliphatischer oder heterocyclischer Ring ist,
- m: eine Zahl zwischen 0 und 6,
- n: eine Zahl zwischen 0 und 6 ist

und für m > 1
X jeweils verschiedene oder gleiche der oben genannten Bedeutungen haben kann,
und für n > 1
Y jeweils verschiedene oder gleiche der oben genannten Bedeutungen haben kann.

In einer besonderen Ausführungsform bedeuten
- X: Chlor, Brom, -NO₂, -OCH₃, -OCH₂(C₆H₅), Chlorsulfonyl, -OH, -SO₂O(C₆H₅), -SO₂N(CH₃)₂ -SO₂NHCH₃, Methyl, Ethyl, n-Propyl, Isopropyl, n-Butyl, iso-Butyl, sek.-Butyl, tert.-Butyl oder ein vorzugsweise in 4,5-Stellung ankondensierter cycloaliphatischer 5- oder 6-Ring, wobei -C₆H₅ hier und auch im folgenden für Phenyl steht,
- Y: Fluor, Chlor, Brom, -NO₂, -OH, -OCH₃, -NH₂, Chlorsulfonyl, -NHCOCH₃, -N(C₂H₅)₂, Methyl, Ethyl, n-Propyl, Isopropyl, n-Butyl, iso-Butyl, sek.-Butyl, tert.-Butyl, ein gegebenenfalls substituiertes Phenyl, ein vorzugsweise in 5,6- bzw. 7,8-Stellung ankondensierter cycloaliphatischer 5- oder 6-Ring oder ein, vorzugsweise in 6,7-Stellung, ankondensierter heterocyclischer 5- oder 6-Ring, der gegebenenfalls ein bis zwei Heteroatome aus der Reihe O, S, N, vorzugsweise Sauerstoff, enthält,
- m: eine Zahl zwischen 0 und 4 und
- n: eine Zahl zwischen 0 und 5.

In einer ganz besonders bevorzugten Ausführungsform bedeuten n und m gleich 0.

Unter der allgemeinen Formel (I) der erfindungsgemäßen Farbstoffe werden entweder isomerenreine Verbindung der beiden möglichen Ausführungsformen (Ia) oder (Ib) 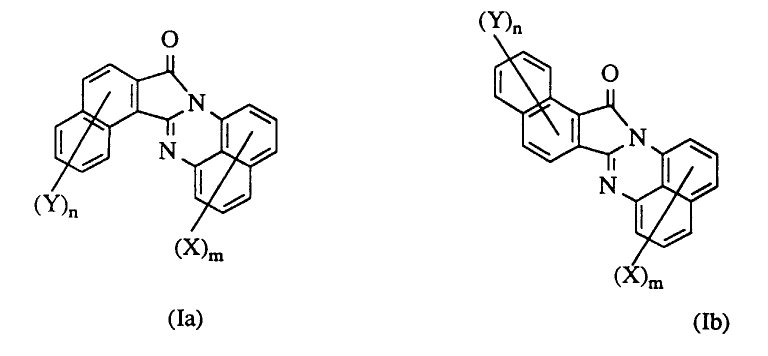 oder beliebig zusammengsetzte Mischungen der beiden Komponenten (Ia) und (Ib) verstanden. Die Indices n und m können dabei den Charakter einer statistischen Angabe haben und somit eine beliebige Zahl des definierten Bereiches annehmen.

Die erfindungsgemäßen Farbstoffe der Formel (I) lassen sich nach an sich bekannten Verfahren (vgl. z.B. D.R.P 202 354, Chem. Ber. 75 (1942), 719; Liebigs Ann.

Chem. 365 (1909), 128) durch Kondensation von Naphthalin-1,2-dicarbonsäuren bzw. deren Anhydriden der Formel (II) 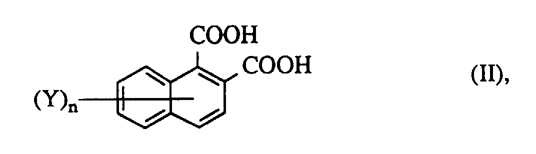 in welcher
- Y und n: die genannte Bedeutung besitzen,
mit Naphthalin-1,8-diaminen der Formel (III) 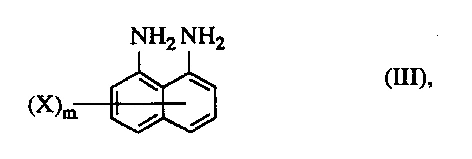 in welcher
- X und m: die angeführte Bedeutung haben,
darstellen.

Die Kondensation kann dabei direkt durch Zusammenschmelzen äquimolarer Mengen der Komponenten der Formeln (II) und (III) bei Temperaturen zwischen 50°C und 220°C, vorzugsweise bei 120 bis 180°C, erfolgen, oder vorteilhafter in einem Lösungsmittel bei Temperaturen zwischen 20°C und 220°C, vorzugsweise 50 bis 180°C, gegebenenfalls unter Druck durchgeführt werden, wobei eine destillative Entfernung des Reaktionswassers erfolgen kann.

Geeignete Lösungsmittel sind beispielsweise: Chlorbenzol, o-Dichlorbenzol, Trichlorbenzol, Xylol, Dimethylformamid, N-Methylpyrrolidon, Eisessig, Propionsäure, Phenol, Kresole, Phenoxyethanol, Glykole und deren Mono- und DialkylAlkohole, z.B. Methanol, Ethanol, i-Propanol, Wasser und wäßrige Lösungsmittel wie z.B. verdünnte Schwefelsäure.

Gegebenenfalls kann die Reaktion unter Zusatz eines sauren Katalysators erfolgen.

Geeignete Katalysatoren sind beispielsweise: Zinkchlorid, p-Toluolsulfonsäure, Salzsäure, Schwefelsäure, organische Säuren.

Die Reaktion läuft im allgemeinen unter Normaldruck ab, gegebenenfalls kann sie jedoch auch bei erhöhtem Druck, vorzugsweise zwischen 1 und 40 bar durchgeführt werden.

Die entsprechenden Naphthalin-1,2-dicarbonsäuren (bzw. deren funktionelle Derivate) lassen sich z.B. nach Chem. Ber. 65 (1932), 1388; ibid. 73 (1940), 19; Liebigs Ann. Chem. 595 (1955), 1; ibid. 684 (1965), 127; J.Am. Soc. 57 (1935), 1851; ibid. 60 (1938), 951; ibid. 67 (1945), 345; ibid. 70 (1948), 2748; ibid. 72 (1950), 1035; J. Org. Chem. 27 (1962), 5; ibid. 29 (1964), 2261; ibid. 32 (1967), 784; ibid. 36 (1971), 3755; J. Chem. Soc. (1951), 2488; ibid. (1961), 2701; Aust. J. Chem. 22 (1969) 1721; Przem. Chem. 51 (1972), 227 u.a. bzw. in Analogie dazu darstellen.

Chlorierte bzw. bromierte Naphthalin-1,2-dicarbonsäurederivate können auch durch Umsetzung von substituierten oder unsubstituierten Naphthalin-1,2-dicarbonsäuren mit Chlor oder Brom gegebenenfalls in Gegenwart von Lewis-Säuren wie z.B. Eisen-, Aluminium- oder Zinkhalogeniden, Eisenpulver u.a. in der Schmelze oder in einem inerten Lösungsmittel wie z.B. Tetrachlorkohlenstoff, Tetrachlorethan, Nitrobenzol, o-Dichlorbenzol, Schwefelkohlenstoff u.a. gewonnen werden.

Die eingesetzten substituierten Naphthalin-1,8-diamine lassen sich z.B. nach D.R.P 122 475; D.R.P 108 166; J. Chem. Soc. (1932) 2310; ibid. (1936), 556, 1338; ibid. (1945), 454, 543; ibid. (1951) 221; J. prakt. Chem. 94 (1916), 45; Compt. red. 224 (1947), 1569; An. Soc. espan. 31 (1933), 861, 876; J. Org. Chem. 24 (1959), 214 u.a. oder in Analogie dazu herstellen.

Die erfindungsgemäßen Farbstoffe der Formel (I) können demnach aus unsubstituierten und/oder substituierten Edukten mit einem sich gegebenenfalls anschließenden Substituentenaustausch hergestellt werden. Unter Substituentenaustausch wird dabei sowohl der Austausch eines Wasserstoffs oder anderen Liganden durch einen Substituenten, z.B. mittels Chlorierung, Bromierung, Sulfonierung, Chlorsulfonierung oder Nitrierung als auch die Modifizierung von Substituenten verstanden, wie im folgenden beispielhaft ausgeführt wird.

Farbstoffe der Formel (I), in denen X und/oder Y für einen Alkyl- oder Arylaminosulfonylrest stehen, lassen sich außer nach dem erstgenannten Verfahren auch aus den entsprechenden Farbstoffen der Formel (I), in denen X und/oder Y einen Chlorsulfonylrest bedeuten, mit Alkyl- bzw. Arylaminen darstellen.

Erfindungsgemäße Farbstoffe, in denen X und/oder Y gleich einem Aryloxysulfonylrest sind, können auch durch Umsetzung der entsprechenden Chlorsulfonyl-Farbstoffe mit Phenolen oder Naphtholen in Gegenwart einer Base, z.B. Pyridin, Triethylamin, Alkali- bzw. Erdalkalicarbonaten, -hydroxiden oder -oxiden gewonnen werden.

Farbstoffe der Formel (I), in denen X und/oder Y für Alkyloxy oder Acyloxy stehen, können zusätzlich durch Alkylierung bzw. Acylierung der erfindungsgemäßen Farbstoffe, in welchen X und/oder Y eine Hydroxygruppe bedeuten, dargestellt werden.

Jene Farbstoffe der Formel (I) mit X und/oder Y gleich einer gegebenenfalls acylierten bzw. alkylierten Aminogruppe können außerdem durch Reduktion mit üblichen Reduktionsmitteln, z.B. Eisen, Zink, Natriumsulfid, Wasserstoff u.a. der entsprechenden Verbindungen, in denen X und/oder Y für eine Nitrogruppe stehen, und gegebenenfalls nachfolgende Acylierung bzw. Alkylierung gewonnen werden. Der Acylierungsschritt kann auch im Zuge der Reduktion durch Zusatz eines Acylierungsmittels erfolgen.

Die erfindungsgemäßen Farbstoffe eignen sich hervorragend zum Färben von Kunststoffen in der Masse.

Unter Massefärben werden hierbei insbesondere Verfahren verstanden, bei dem der Farbstoff in die geschmolzene Kunststoffmasse eingearbeitet wird, z.B. unter Zuhilfenahme eines Extruders, oder bei dem der Farbstoff bereits Ausgangskomponenten zur Herstellung des Kunststoffes, z.B. Monomeren vor der Polymerisation, zugesetzt wird.

Besonders bevorzugte Kunststoffe sind Thermoplaste, beispielsweise Vinylpolymere, Polyester und Polyamide.

Geeignete Vinylpolymere sind Polystyrol, Styrol-Acrylnitril-Copolymere, Styrol-Butadien-Copolymere, Styrol-Butadien-Acrylnitril-Terpolymere, Polymethacrylat.

Weiterhin geeignete Polyester sind: Polyethylenterephthalate, Polycarbonate und Celluloseester.

Bevorzugt sind Polystyrol, Styrol-Mischpolymere, Polycarbonate und Polymethacrylat. Besonders bevorzugt ist Polystyrol.

Die erwähnten hochmolekularen Verbindungen können einzeln oder in Gemischen, als plastische Massen oder Schmelzen vorliegen.

Die erfindungsgemäßen Farbstoffe werden in feinverteilter Form zur Anwendung gebracht, wobei Dispergiermittel mitverwendet werden können aber nicht müssen.

Werden die Farbstoffe (I) nach der Polymerisation eingesetzt, so werden sie mit dem Kunststoffgranulat trocken vermischt oder vermahlen und dieses Gemisch z.B. auf Mischwalzen oder in Schnecken plastifiziert und homogenisiert. Man kann die Farbstoffe aber auch der schmelzflüssigen Masse zugeben und diese durch Rühren homogen verteilen. Das derart vorgefärbte Material wird dann wie üblich z.B. durch Verspinnen zu Borsten, Fäden usw. oder durch Extrusion oder im Spritzguß-Verfahren zu Formteilen weiterverarbeitet.

Da die Farbstoffe der Formel (I) gegenüber Polymerisationskatalysatoren, insbesondere Peroxiden, beständig sind, ist es auch möglich, die Farbstoffe den monomeren Ausgangsmaterialien für die Kunststoffe zuzusetzen und dann in Gegenwart von Polymerisationskatalysatoren zu polymerisieren. Dazu werden die Farbstoffe vorzugsweise in den monomeren Komponenten gelöst oder mit ihnen innig vermischt.

Die Farbstoffe der Formel (I) werden vorzugsweise zum Färben der genannten Polymeren in Mengen von 0,0001 bis 1 Gew.-%, insbesondere 0,01 bis 0,5 Gew.-%, bezogen auf die Polymermenge, eingesetzt.

Durch Zusatz von in den Polymeren unlöslichen Pigmenten, wie z.B. Titandioxid, können entsprechende wertvolle gedeckte Färbungen erhalten werden.

Titandioxid kann in einer Menge von 0,01 bis 10 Gew.-%, vorzugsweise 0,1 bis 5 Gew.-%, bezogen auf die Polymermenge, verwendet werden.

Nach dem erfindungsgemäßen Verfahren erhält man transparente bzw. gedeckte brillante, gelbstichig rote bis violette Färbungen mit guter Hitzebeständigkeit sowie guter Licht- und Wetterechtheit.

In das erfindungsgemäße Verfahren können auch Mischungen verschiedener Farbstoffe der Formel (I) und/oder Mischungen von Farbstoffen der Formel (I) mit anderen Farbstoffen und/oder anorganischen bzw. organischen Pigmenten eingesetzt werden.

Die Erfindung wird erläutert, jedoch nicht beschränkt auf die folgenden Beispiele, in denen die Teile gewichtsmäßig angegeben sind, Prozentangaben Gewichtsprozente (Gew.%) bedeuten und Z ein Rest zur Vervollständigung eines 1,2-Naphthylensystems ist.

### Beispiel 1

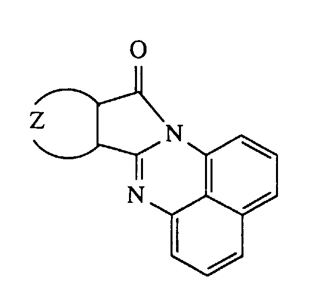

### A) Darstellung

Eine Mischung von 2,0 Teilen Naphthalin-1,2-dicarbonsäureanhydrid, 1,6 Teilen Naphthalin-1,8-diamin und 20 Teilen Eisessig wird 5 Min. auf 75°C erhitzt. Nach dem Erkalten wird der erhaltene Niederschlag abgesaugt und mit Methanol und Wasser gewaschen. Man erhält so 3,0 Teile (94 %) des obigen Farbstoffes. λₘₐₓ = 499 nm (Toluol).

¹H-NMR-Protonierungsexperimente in deuteriertem Dimethylsulfoxid/Trifluoressigsäure zeigen, daß der obige Farbstoff in der folgenden isomeren Form vorliegt:

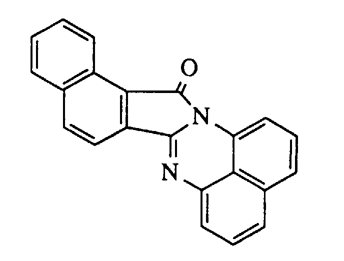

¹H-NMR (DMSO): δ 7,5-8,0 (m, 7H), 8,2 (d, J=8Hz, 1H), 8,25 (d, J=8Hz, 1H), 8,45 (d, J=8Hz, 2H), 9,05 (d, J=8Hz, 1H) ppm.

¹H-NMR (DMSO/Trifluoressigsäure): δ 7,4-7,9 (m, 7H), 8,0 (d, J=8Hz, 1H), 8,25-8,35 (m, 2H), 8,4 (d, J=8Hz, 1H), 8,85 (d, J=8Hz, 1H) ppm.

### B) Färbebeispiele

### Beispiel a)

100 Teile Polystyrol-Granulat und 0,02 Teile eines Farbstoffes der obigen Formel werden im Trommelmischer während 15 Minuten intensiv vermischt. Das trocken angefärbte Granulat wird bei 240°C auf einer Schneckenspritzgießmaschine verarbeitet. Man erhält transparente, rote Platten von sehr guter Lichtechtheit. Anstelle von Polystyrol-Polymerisat können auch Mischpolymerisate mit Butadien und Acrylnitril verwendet werden. Setzt man zusätzlich 0,5 Teile Titandioxid zu, so erhält man farbstarke gedeckte Färbungen.

### Beispiel b)

0,015 Teile des Farbstoffes aus Beispiel A) und 100 Teile Polymethylmethacrylat werden trocken vermischt und auf einem 1-Wellenextruder bei 230°C homogenisiert. Das als Strang aus dem Extruder austretende Material wird granuliert. Es kann anschließend zu Formen verpreßt werden. Man erhält einen transparent rot-gefärbten Kunststoff mit guter Licht- und Wetterechtheit.

### Beispiel c)

100 Teile eines handelsüblichen Polycarbonats werden in Form von Granulat mit 0,03 Teilen des Farbstoffes aus Beispiel A) trocken gemischt. Das so bestäubte Granulat wird auf einem 2-Wellenextruder bei 290°C homogenisiert. Man erhält eine transparente rote Färbung von guter Lichtechtheit. Das gefärbte Polycarbonat wird als Strang aus dem Extruder ausgetragen und zu Granulat verarbeitet. Das Granulat kann nach den üblichen Methoden der Konfektionierung thermoplastischer Massen verarbeitet werden.

Arbeitet man wie oben beschrieben, aber unter Zusatz von 1 % Titandioxid, so erhält man eine rote gedeckte Färbung.

### Beispiel d)

Mit 100 Teilen Styrol-Acrylnitril-Copolymerisat werden 0,04 Teile des Farbstoffes aus Beispiel A) trocken vermischt und in einem 2-Wellenextruder bei 190°C homogenisiert, granuliert und dann zu Formen auf übliche Weise verpreßt. Man erhält einen transparent roten Kunststoff von guter Lichtechtheit.

### Beispiel e)

0,025 Teile des Farbstoffes aus Beispiel A) werden mit 100 Teilen Polyethylenterephthalat einer transparenten Type vermischt und in einem 2-Wellenextruder bei 280°C homogenisiert. Man erhält eine transparente, rote Färbung mit guter Lichtechtheit. Nach anschließender Granulierung kann der eingefärbte Kunststoff nach den üblichen Methoden der thermoplastischen Verformung verarbeitet werden. Arbeitet man unter Zusatz von 1 % Titandioxid, so erhält man eine gedeckte Färbung.

### Beispiel f)

In 98,9 Teilen Styrol werden 0,05 Teile tert.-Dodecylmercaptan sowie 0,05 Teile des Farbstoffes aus Beispiel A) gelöst. Diese Lösung dispergiert man in einer Lösung aus 200 Teilen entsalztem Wasser, 0,3 Teilen teilverseiftem Polyvinylacetat (z.B. Mowiol® 50/88 der Fa. Hoechst) und 0,05 Teilen Dodecylbenzolsulfonat. Nach Zusatz von 0,1 Teilen Dibenzoylperoxid in 1 Teil Styrol wird die Dispersion unter kräftigem Rühren auf 80°C erhitzt und die Polymerisation gestartet. Bei Anwendung folgender Polymerisationsbedingungen: 4 h bei 80°C, 2 h bei 90°C, 3 h bei 110°C, 2 h bei 130°C, erhält man das Polymerisat in einer Ausbeute von 98 % der Theorie. Das Polymerisat fällt in Form von Perlen an, die je nach Rührbedingungen einen Durchmesser von 0,1 bis 1,5 mm (D₅₀-Wert) aufweisen. Das Polymerisat wird durch Filtration vom Serum getrennt, bei 110°C auf eine Restfeuchte von 0,5 % getrocknet. Nach dem Aufschmelzen in einem Mischaggregat (Heißwalze) werden 0,5 % Zinkstearat und 0,2 % Ionol zugemischt und das Polymerisat granuliert.

Das Polymerisat kann nach den üblichen Methoden der thermoplastischen Verformung, z.B. im Spritzguß-Verfahren, zu roten, transparenten Formteilen verarbeitet werden.

### Beispiel g)

In 74,8 Teilen Styrol und 25 Teilen Acrylnitril werden 0,2 Teile tert.-Dodecylmercaptan sowie 0,01 Teile des Farbstoffes aus Beispiel A) gelöst, diese Lösung wird anschließend in einer Lösung aus 200 Teilen vollentsalztem Wasser und 0,2 Teilen eines mit Natriumhydroxid neutralisierten Copolymerisats von Styrol und Maleinsäureanhydrid dispergiert. Nach Zusatz von 0,1 Teilen Dibenzoylperoxid, gelöst in einem Teil Styrol, wird die Dispersion unter kräftigem Rühren auf 80°C erhitzt und die Polymerisation gestartet. Nach der Polymerisation wie im Beispiel f) wird auch in gleicher Weise, wie im Beispiel angegeben, aufgearbeitet. Als Schmiermittel wird 0,5 % Zinkstearat und als Alterungsschutzmittel 0,5 % Ionol auf der Heißwalze eingearbeitet Das granulierte Polymerisat läßt sich zu transparenten roten Formteilen verspritzen.

### Beispiel h)

In einem kontinuierlich arbeitenden, überflutet gefahrenen Vorreaktor wird eine Lösung aus 99,95 Teilen Styrol, 0,04 Teilen des Farbstoffes aus Beispiel A) und 0,01 Teilen Di-tert.-butylperoxid eingefahren und bei einer Temperatur von 75°C anpolymerisiert. Die aus dem Vorreaktor austretende, anpolymerisierte Lösung (Polystyrol-Gehalt 20 %) wird in einem 2-Wellenschneckenaggregat eingeführt. Die beiden Wellen laufen mit 20 Upm gegenläufig. Die vier heiz- bzw. kühlbaren Segmente der Schneckenmaschine werden in der Reihenfolge Produkteintritt - Produktaustritt auf 110°C, 130°C, 160°C, 180°C gehalten. Das Polymerisat verläßt den Schneckenreaktor mit einer Feststoffkonzentration von 80 %. In einem nachgeschalteten Extruder werden 3 Gew.-Teile Ionol und 5 Gew.-Teile Octylalkohol pro 1000 Gew.-Teile Polymerlösung zudosiert, das Polymerisat entgast und anschließend granuliert. Das rot gefärbte Granulat kann zu Formteilen verarbeitet werden.

### Beispiel i)

0,02 Teile des Farbstoffes aus Beispiel A) werden in 74,97 Teilen Styrol und 25 Teilen Acrylnitril bzw. Methacrylnitril gelöst. Nach Zugabe von 0,01 Teilen Di-tert.-butylperoxid wird die so erhaltene Lösung in einem kontinuierlich arbeitenden, überflutet gefahrenen Vorreaktor eingefahren. Die Polymerisation und Aufarbeitung erfolgt wie im Beispiel h) angegeben. Das transparente, rote Granulat kann nach den üblichen Methoden der Verarbeitung thermoplastischer Massen zu Profilen und Platten weiterverarbeitet werden.

### Beispiel k)

In 99,97 Teilen Methylmethacrylat werden 0,03 Teile des Farbstoffes aus Beispiel A) gelöst. Nach Zugabe von 0,1 Teilen Dibenzoylperoxid wird die Lösung auf 120°C erhitzt und die Polymerisation gestartet. Nach 30 Min. wird das anpolymerisierte Methylmethacrylat zwischen zwei Glasplatten bei 80°C während zehn Stunden auspolymerisiert. Man erhält rote, transparente Polymethylmethacrylat-Platten.

### Beispiel l)

100 Teile Polyamid-6-Schnitzel, erhalten durch Polymerisation von ε-Caprolactam, werden mit 0,05 Teilen des Farbstoffes aus Beispiel A) in einer Schüttelmaschine innig vermischt. Die so erhaltenen gepuderten Schnitzel werden bei 260°C in einem Extruder aufgeschmolzen, die erhaltene Schmelze durch eine Einloch-Düse vom Durchmesser 0,5 mm gepreßt und der austretende Faden mit einer Geschwindigkeit von ca. 25 m/Min. abgezogen. Der Faden läßt sich in heißem Wasser auf das Vierfache verstrecken. Erhalten wird ein transparent rot gefärbter Faden von ausgezeichneter Lichtechtheit. Will man eine gedeckte Färbung erhalten, so gibt man zusätzlich 0,5 Teile Titandioxid zu.

Die Verweilzeit im Extruder kann ohne Beeinträchtigung des Farbtons bis zu 30 Minuten betragen.

### Beispiele 2 bis 60

Auf analoge Weise wie in Beispiel 1A beschrieben, werden aus den Verbindungen der Formeln (II) und (III) die in der Tabelle 1 beschriebenen Farbstoffe erhalten, die in Kunststoffen entsprechend Beispiel 1B a)-l) gefärbt werden und die in Tabelle 1 angegebenen Farbtöne erzielen.

**Tabelle 1**

| Beispiel | eingesetztes substituiertes Naphthalin-1,2-dicarbonsäureanhydrid (II) | eingesetztes substituiertes 1,8-Diaminonaphthalin (III) | Ausbeute an Farbstoff (i) analog Biespiel 1A | Farbton analog Biespiel 1B |
|---|---|---|---|---|
| 2 | 4-Methyl | unsubstituiert | 92% | rot |
| 3 | 5-Methyl | -"- | 92% | rot |
| 4 | 7-Methyl | -"- | 90% | rot |
| 5 | 3,7-Dimethyl | -"- | 89% | rot |
| 6 | 4,7-Dimethyl | -"- | 90% | rot |
| 7 | 5,6-Dimethyl | -"- | 90% | rot |
| 8 | 5,7-Dimethyl | -"- | 88% | rot |
| 9 | 5,8-Dimethyl | -"- | 91% | rot |
| 10 | 6,7-Dimethyl | -"- | 85% | rot |
| 11 | 3-Ethyl | -"- | 86% | rot |
| 12 | 7-Ethyl | -"- | 89% | rot |
| 13 | 3,5-Diethyl | -"- | 83% | rot |
| 14 | 7-t-Butyl | -"- | 85% | rot |
| 15 | 5,6-Tetramethylen | -"- | 85% | rot |
| 16 | 7,8-Tetramethylen | -"- | 89% | rot |
| 17 | 3-Phenyl | -"- | 95% | blaustichig rot |
| 18 | 4-Phenyl | -"- | 93% | blaustichig rot |
| 19 | 4-(4-Methylphenyl) | -"- | 91% | blaustichig rot |
| 20 | 4-(4-Chlorphenyl) | -"- | 96% | blaustichig rot |
| 21 | 7-Phenyl | -"- | 94% | blaustichig rot |
| 22 | 4,7-Diphenyl | -"- | 98% | blaustichig rot |
| 23 | 7-Hydroxy | -"- | 90% | rot |
| 24 | 7-Methoxy | -"- | 91% | gelbstichig rot |
| 25 | 6,7-Dimethoxy | -"- | 91% | gelbstichig rot |
| 26 | 6,7,8-Trimethoxy | -"- | 87% | gelbstichig rot |
| 27 | 7-Methyl-3-phenyl | -"- | 90% | gelbstichig rot |
| 28 | 5,8-Dimethyl-3-phenyl | -"- | 92% | gelbstichig rot |
| 29 | 7-Methoxy-3-methyl | -"- | 89% | gelbstichig rot |
| 30 | 7-Hydroxy-6-methoxy-3-methyl | -"- | 85% | gelbstichig rot |
| 31 | 6,7-Dimethoxy-3-methyl | -"- | 86% | gelbstichig rot |
| 32 | 3-Methyl-6,7-methylendioxy | -"- | 86% | gelbstichig rot |
| 33 | 3-Methyl-6,7,8-trimethoxy | -"- | 88% | gelbstichig rot |
| 34 | 7-Methoxy-4-phenyl | -"- | 92% | rot |
| 35 | 7-Methoxy-4-(4-methoxy-phenyl) | -"- | 93% | gelbstichig rot |
| 36 | 6,7-dimethoxy-4-phenyl | -"- | 90% | gelbstichig rot |
| 37 | 7-Amino | unsubstituiert | 87% | gelbstichig rot |
| 38 | 7-Acetylamino | -"- | 95% | rot |
| 39 | 7-Phthalimido | -"- | 98% | blaustiching rot |
| 40 | 7-Diethylamino | -"- | 86% | blaustiching rot |
| 41 | 7-Nitro | -"- | 93% | blaustiching rot |
| 42 | 8-Nitro | -"- | 96% | blaustiching rot |
| 43 | 7-Fluor | -"- | 88% | blaustiching rot |
| 44 | 7-Chlor | -"- | 93% | blaustiching rot |
| 45 | 7-Brom | -"- | 98% | blaustiching rot |
| 46 | 7-Chlor-4-(4-chlor-phenyl | -"- | 97% | blaustiching rot |
| 47 | 7-Brom-4-phenyl | -"- | 97% | rot |
| 48 | unsubstituiert | 2-Methyl | 91% | rot |
| 49 | -"- | 4-Methyl | 90% | rot |
| 50 | -"- | 4,5-Dimethylen | 93% | gelbstichig rot |
| 51 | -"- | 3,6-Dinitro | 92% | rot |
| 52 | -"- | 4,5-Dihydroxy | 88% | rot |
| 53 | -"- | 4,5-Dibenzyloxic | 96% | rot |
| 54 | -"- | 2,7-Dihydroxy | 94% | rot |
| 55 | -"- | 2,7-Dimethoxy | 87% | gelbstichig rot |
| 56 | -"- | 2-Chlor | 83% | gelbstichig rot |
| 57 | -"- | 4-Chlor | 84% | gelbstichig rot |
| 58 | -"- | 4-Brom | 91% | gelbstichig rot |
| 59 | -"- | 2,4-Dibrom | 98% | gelbstichig rot |
| 60 | -"- | 2,4,7-Tribrom | 98% | gelbstichig rot |

### Beispiel 61

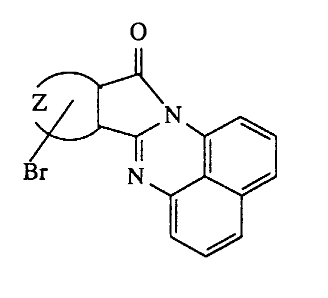

a) Bromnaphthalin-1,2-dicarbonsäureanhydrid:
   4,0 g Naphthalin-1,2-dicarbonsäureanhydrid, 0,05 g Ferrum reductum, 20 ml Tetrachlormethan und 5,0 ml Brom werden 3 Tage bei Raumtemperatur verrührt. Anschließend entfernt man das Lösungsmittel vollständig im Vakuum, löst den Rückstand in einer Lösung von 2,5 g Natriumhydroxid und 1,0 g Natriumsulfit in 150 ml Wasser, filtriert vom Eisenhydroxid ab und fällt das Produkt mit konzentrierter Salzsäure bei 0-5°C (Ausbeute: 5,7 g). Die erhaltene Säure wird in 25 ml Acetanhydrid 1 Std. unter Rückfluß erhitzt. Nach dem Erkalten wird das Produkt abgesaugt und im Vakuum über KOH getrocknet; Ausbeute: 4,5 g (81 %), Bromgehalt: 28,75 % (theoretisch 28,9 %).
b) Setzt man das so gewonnene Anhydrid (2,8 Teile) analog zu Beispiel 1A um, so erhält man 3,8 Teile (95 %) des obigen Farbstoffes. λₘₐₓ = 500 nm (N-Methylpyrrolidon).

Es wird analog zu Beispiel 1B gefärbt und dabei blaustichig rote Färbungen von ausgezeichneter Lichtechtheit erhalten.

### Beispiel 62

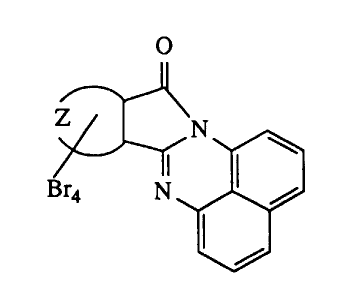

a) Tetrabromnaphthalin-1,2-dicarbonsäureanhydrid: 2,0 g Naphthalin-1,2-dicarbonsäureanhydrid, 0,05 g Ferrum reductum und 5,2 ml Brom werden unter Verwendung eines langen Intensivkühlers 6 Std. auf 210°C erhitzt. Aufarbeitung analog zu Beispiel 61a) liefert 5,0 g Tetrabromnaphthalin-1,2-dicarbonsäure, die mit Acetanhydrid in das Anhydrid überführt wird. Ausbeute: 4,8 g (94 %), Bromgehalt: 62,4 % (theoretisch 62,7 %).
b) Setzt man die so erhaltene Tetrabromverbindung (5,2 Teile) analog zu Beispiel 1A um, so erhält man 6,3 Teile (99 %) des obengenannten Farbstoffes Tetrabrom-1,2-naphthaloperinon. Färbt man diesen analog zu Beispiel 1B aus, so ergeben sich violette Färbungen mit sehr guter Lichtechtheit. λₘₐₓ = 523 nm (N-Methylpyrrolidon).

### Beispiel 63

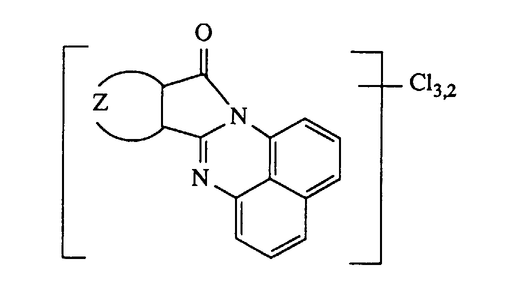

Eine Mischung aus 2,1 Teilen des Farbstoffes aus Beispiel 1, 2,8 Teilen Sulfurylchlorid und 50 Teile N-Methylpyrrolidon wird 20 Std. bei Raumtemperatur gerührt. Dabei werden nach 3,5 Std. und nach 6 Std. jeweils 2,8 Teile Sulfurylchlorid nachgesetzt. Anschließend wird der Niederschlag abgesaugt, mit N-Methylpyrrolidon und Methanol gewaschen und im Vakuum getrocknet. Ausbeute: 1,7 Teile eines Farbstoffes mit 26,2 % Chlorgehalt. Der Farbstoff ergibt in Kunststoffen, entsprechend Beispiel 1B a)-l) gefärbt, gelbstichig rote Nuancen. λₘₐₓ = 483 nm (N-Methylpyrrolidon).

### Beispiel 64

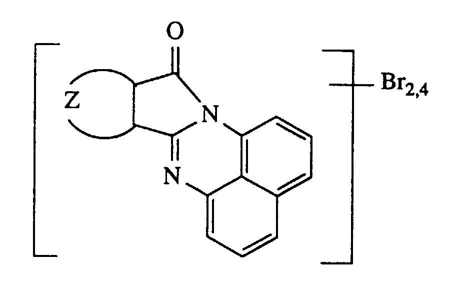

2,1 Teile der Verbindung aus Beispiel 1, 50 Teile Dimethylformamid und 6,9 Teile Brom werden 20 Std. gerührt. Der Niederschlag wird abgesaugt und mit DMF und Methanol gewaschen. Man erhält 3,1 Teile des Farbstoffes mit 37,0 % Bromgehalt, der analog zu Beispiel 1B a)-l) gefärbt, rote Farbtöne liefert. λₘₐₓ = 494 nm (N-Methylpyrrolidon).

### Beispiel 65

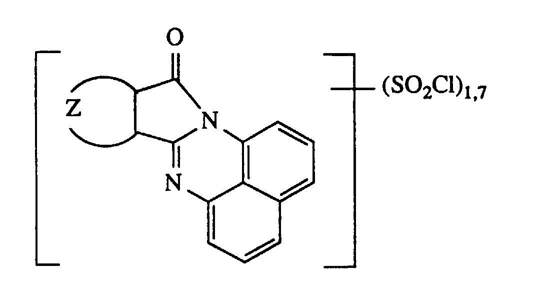

4,5 Teile des Farbstoffes aus Beispiel 1 werden in 35 Teilen Chlorsulfonsäure bei Raumtemperatur eingetragen. Anschließend setzt man 3 Teile Thionylchlorid zu und rührt 3 Std. bei 25-30°C nach. Die Lösung wird auf 200 Teile Eis ausgetragen, der erhaltene Niederschlag abgesaugt, mit Wasser gut gewaschen und im Vakuum über KOH getrocknet. λₘₐₓ = 467 nm (N-Methylpyrrolidon).

### Beispiel 66

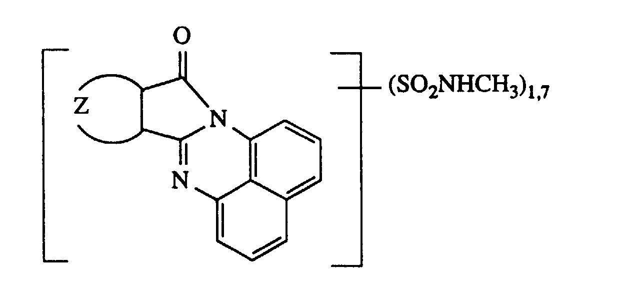

3,0 Teile der Verbindung aus Beispiel 65 werden in 25 Teilen 30 %iger wäßriger Methylaminlösung bei 15°C eingetragen und 1 Std. bei Raumtemperatur nachgerührt. Dann werden 12,5 Teile Eisessig zugesetzt und die Lösung 10 Min. zum Sieden erhitzt. Nach dem Abkühlen wird der entsprechende Niederschlag abgesaugt und mit Wasser gewaschen. Man erhält 2,9 Teile eines Farbstoffes der obigen Formel mit 11,4 % Schwefelgehalt, der Kunststoffe (entsprechend der Beispiele 1B a)-l)) gelbstichig rot färbt. λₘₐₓ = 479 um (N-Methylpyrrolidon).

### Beispiel 67

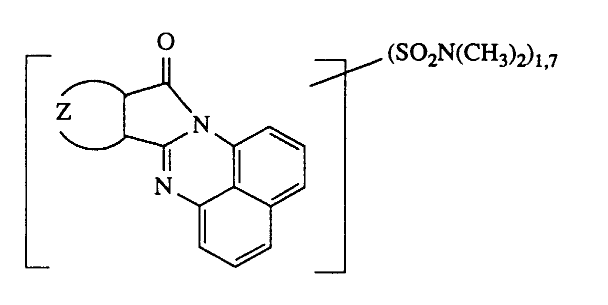

Auf analoge Weise zum Beispiel 66 erhält man den Farbstoff der oben angegebenen Formel mit 11,0 % Schwefelgehalt, wenn man anstelle der Methylaminlösung 25 Teile einer 30 %igen wäßrigen Dimethylaminlösung einsetzt. Ausbeute: 3,1 Teile.

Dieser Farbstoff färbt Kunststoffe gemäß Beispiel 1B a)-l) in gelbstichig roten Nuancen.

### Beispiel 68

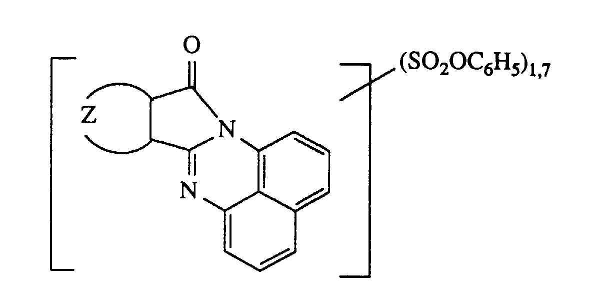

Eine Mischung aus 3,0 Teilen der Verbindung aus Beispiel 65, 3,4 Teilen Phenol, 6,0 Teilen wasserfreiem Kaliumcarbonat, 30 Teilen Aceton und 30 Teilen N-Methylpyrrolidon wird 20 Std. bei Raumtemperatur verrührt. Danach werden 100 Teile Methanol zugesetzt, der Niederschlag abgesaugt und mit Methanol und Wasser gewaschen. Ausbeute: 1,9 Teile eines Farbstoffes der obigen Formel mit einem Schwefelgehalt von 9,3 %. Analog zu Beispiel 1B a)-l) ausgefärbt, zeigt dieser Farbstoff gelbstichig rote Farbtöne. λₘₐₓ = 473 nm (N-Methylpyrrolidon).

## Patentansprüche

1. Farbstoffe der Formel 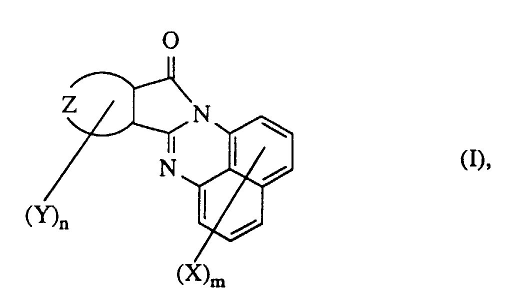 worin
Z ein Rest zur Vervollständigung eines 1,2-Naphthylensystems ist,
X C₁-C₆-Alkyl, Halogen, Nitro, Chlorsulfonyl, Aryloxysulfonyl, Hydroxy, Alkoxy, Acyloxy, ein gegebenenfalls durch Alkyl oder Aryl substituiertes Aminosulfonyl, oder ein ankondensierter cycloaliphatischer oder heterocyclischer Ring ist,
Y C₁-C₆-Alkyl, Aryl, Halogen, Nitro, Hydroxy, Alkoxy, Acyloxy, Aryloxysulfonyl, Chlorsulfonyl, eine gegebenenfalls durch Acyl oder Alkyl substituierte Aminogruppe, ein gegebenenfalls durch Alkyl oder Aryl substituierter Aminosulfonylrest oder ein ankondensierter cycloaliphatischer oder heterocyclischer Ring ist,
m eine Zahl zwischen 0 und 6,
n eine Zahl zwischen 0 und 6 ist,
und für m > 1
X jeweils verschiedene oder gleiche der oben genannten Bedeutungen haben kann,
und für n > 1
Y jeweils verschiedene oder gleiche der oben genannten Bedeutungen haben kann.

2. Farbstoffe gemäß Anspruch 1, dadurch gekennzeichnet, daß
X für Chlor, Brom, -NO₂, -OCH₃, -OCH₂(C₆H₅), Chlorsulfonyl, -OH, -SO₂O(C₆H₅), -SO₂N(CH₃)₂ -SO₂NHCH₃, Methyl, Ethyl, n-Propyl, Isopropyl, n-Butyl, iso-Butyl, sek.-Butyl, tert.-Butyl oder ein vorzugsweise in 4,5-Stellung ankondensierter cycloaliphatischer 5- oder 6-Ring steht,
Y für Fluor, Chlor, Brom, -NO₂, -OH, -OCH₃, Chlorsulfonyl, -NH₂, -NHCOCH₃, -N(C₂H₅)₂, Methyl, Ethyl, n-Propyl, Isopropyl, n-Butyl, iso-Butyl, sek.-Butyl, tert.-Butyl, ein gegebenenfalls substituiertes Phenyl, ein vorzugsweise in 5,6- bzw. 7,8-Stellung ankondensierter cycloaliphatischer 5- oder 6-Ring oder ein, vorzugsweise in 6,7-Stellung, ankondensierter heterocyclischer 5- oder 6-Ring steht, der gegebenenfalls ein bis zwei Heteroatome aus der Reihe O, S, N, vorzugsweise Sauerstoff, enthält,
m eine Zahl zwischen 0 und 4 ist und
n eine Zahl zwischen 0 und 5 ist.

3. Farbstoffe der Formel (I) gemäß Anspruch 1, dadurch gekennzeichnet, daß m und n gleich null sind.

4. Verfahren zur Herstellung der Farbstoffe (I) gemäß Anspruch 1, dadurch gekennzeichnet, daß man Naphthalin-1,2-dicarbonsäuren der Formel (II) 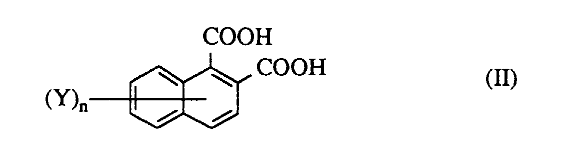 oder deren Anhydride, in denen Y und n die unter Anspruch 1 genannte Bedeutung haben, mit Naphthalin-1,8-diaminen der Formel (III) 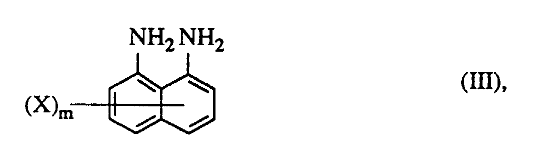 in der
X und m die unter Anspruch 1 genannte Bedeutung haben,
in der Schmelze oder in einem Lösungsmittel bei Temperaturen zwischen 20°C und 220°C, gegebenenfalls in Gegenwart eines sauren Katalysators und/oder unter Druck, umsetzt.

5. Verfahren zum Massefärben von Kunststoffen, dadurch gekennzeichnet, daß ein Farbstoff der Ansprüche 1 bis 3 verwendet wird.

6. Verfahren gemäß Anspruch 5, dadurch gekennzeichnet, daß der Kunststoff ein Thermoplast ist.

7. Verfahren nach Anspruch 5 oder 6, dadurch gekennzeichnet, daß der zu färbende Kunststoff ein Vinylpolymeres insbesondere Polystyrol oder ein Polyester ist.

8. Kunststoffe, gefärbt nach wenigstens einem Verfahren der Ansprüche 5 bis 7.

## Claims

1. Dyestuffs of the formula 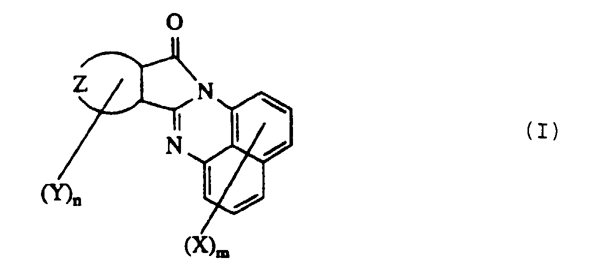 wherein
Z is a radical for completion of a 1,2-naphthylene system,
X is C₁-C₆-alkyl, halogen, nitro, chlorosulphony1, aryloxysulphonyl, hydroxyl, alkoxy, acyloxy, an aminosulphonyl which is optionally substituted by alkyl or aryl, or a fused-on cycloaliphatic or heterocyclic ring,
Y is C₁-C₆-alkyl, aryl, halogen, nitro, hydroxyl, alkoxy, acyloxy, aryloxysulphonyl, chlorosulphonyl, an amino group which is optionally substituted by acyl or alkyl, an aminosulphonyl radical which is optionally substituted by alkyl or aryl, or a fused-on cycloaliphatic or heterocyclic ring,
m is a number between 0 and 6,
n is a number between 0 and 6,
and, for m > 1,
X can in each case have different or the same abovementioned meanings,
and, for n > 1,
Y can in each case have different or the same abovementioned meanings.

2. Dyestuffs according to Claim 1, characterised in that
X represents chlorine, bromine, -NO₂, -OCH₃, -OCH₂(C₆H₅), chlorosulphonyl, -OH, -SO₂O(C₆H₅), -SO₂N(CH₃)₂, -SO₂NHCH₃, methyl, ethyl, n-propyl, isopropyl, n-butyl, iso-butyl, sec-butyl, tert-butyl or a cycloaliphatic 5- or 6-membered ring which is preferably fused on in the 4,5-position,
Y represents fluorine, chlorine, bromine, -NO₂, -OH, -OCH₃, chlorosulphonyl, -NH2, -NHCOCH₃, -N(C₂H₅)₂, methyl, ethyl, n-propyl, isopropyl, n-butyl, iso-butyl, sec-butyl, tert-butyl, an optionally substituted phenyl, a cycloaliphatic 5- or 6-membered ring which is preferably fused on in the 5,6- or 7,8-position, or a heterocyclic 5- or 6-membered ring which is preferably fused on in the 6,7-position and optionally contains one or two hetero atoms from the series comprising O, S and N, preferably oxygen,
m is a number between 0 and 4 and
n is a number between 0 and 5.

3. Dyestuffs of the formula (I) according to Claim 1, characterised in that m and n are zero.

4. Process for the preparation of the dyestuffs (I) according to Claim 1, characterised in that naphthalene-1,2-dicarboxylic acids of the formula (II) 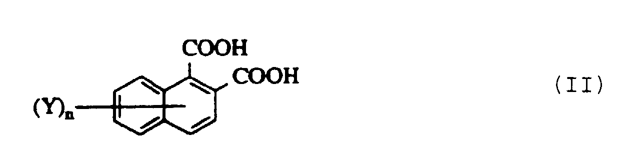 or anhydrides thereof, in which Y and n have the meaning given under Claim 1, are reacted with naphthalene-1,8-diamines of the formula (III) 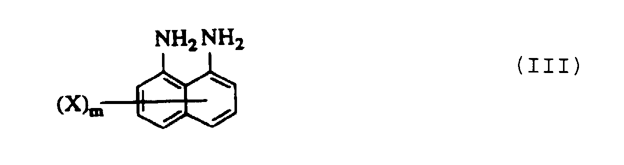 in which X and m have the meaning given under Claim 1, in the melt or in a solvent at temperatures between 20°C and 220°C, if appropriate in the presence of an acid catalyst and/or under pressure.

5. Process for bulk dyeing of plastics, characterised in that a dyestuff of Claims 1 to 3 is used.

6. Process according to Claim 5, characterised in that the plastic is a thermoplastic.

7. Process according to Claim 5 or 6, characterised in that the plastic to be dyed is a vinyl polymer, in particular polystyrene, or a polyester.

8. Plastics dyed by at least one process of Claims 5 to 7.

## Revendications

1. Colorants de formule 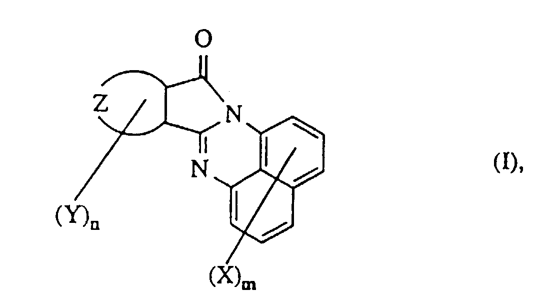 dans laquelle
Z représente un reste complétant un système 1,2-naphtylène,
X représente un reste alkyle en C₁-C₆, halogène, nitro, chlorosulfonyle, aryloxysulfonyle, hydroxy, alcoxy, acyloxy, aminosulfonyle éventuellement substitué par alkyle ou aryle, ou un noyau condensé cycloaliphatique ou hétérocyclique,
Y représente un reste alkyle en C₁-C₆, aryle, halogène, nitro, hydroxy, alcoxy, acyloxy, aryloxysulfonyle, chlorosulfonyle, un groupe amino éventuellement substitué par acyle ou alkyle, un reste aminosulfonyle éventuellement substitué par alkyle ou aryle, ou un noyau condensé cycloaliphatique ou hétérocyclique,
m est un nombre compris entre 0 et 6,
n est un nombre compris entre 0 et 6
et, lorsque m > 1,
les X peuvent avoir chacun des significations identiques ou différentes parmi les significations indiquées ci-dessus,
et, lorsque n > 1,
les Y peuvent avoir chacun des significations identiques ou différentes parmi les significations indiquées ci-dessus.

2. Colorants selon la revendication 1, caractérisés en ce que
X représente un atome de chlore ou de brome ou un reste -NO₂, -OCH₃, -OCH₂(C₆H₅), chlorosulfonyle, -OH, -SO₂O(C₆H₅), -SO₂N(CH₃)₂, -SO₂NHCH₃, méthyle, éthyle, n-propyle, isopropyle, n-butyle, isobutyle, sec-butyle, tert-butyle ou un noyau cycloaliphatique de 5 ou 6 chaînons condensé de préférence en position 4,5,
Y représente un atome de fluor, de chlore ou de brome ou un reste -NO₂, -OH, -OCH₃, chlorosulfonyle, -NH₂, -NHCOCH₃, -N(C₂H₅)₂, méthyle, éthyle, n-propyle, isopropyle, n-butyle, isobutyle, sec-butyle, tert-butyle, un reste phényle éventuellement substitué, un noyau cycloaliphatique de 5 ou 6 chaînons condensé de préférence en position 5,6 ou 7,8, ou un noyau hétérocyclique de 5 ou 6 chaînons condensé de préférence en position 6,7 et contenant éventuellement 1 à 2 hétéroatomes de la série O, S, N, de préférence l'oxygène,
m est un nombre compris entre 0 et 4, et
n est un nombre compris entre 0 et 5.

3. Colorants de formule (I) selon la revendication 1, caractérisés en ce que m et n sont égaux à 0.

4. Procédé de préparation des colorants (I) selon la revendication 1, caractérisé en ce que l'on fait réagir des acides naphtalène-1,2-dicarboxyliques de formule (II) 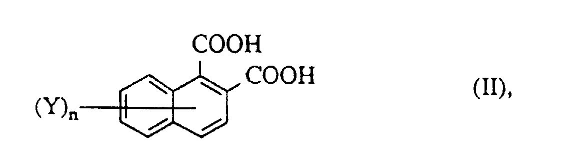 dans laquelle Y et n ont la signification indiquée dans la revendication 1, ou leurs anhydrides, avec des naphtalène-1,8-diamines de formule (III) 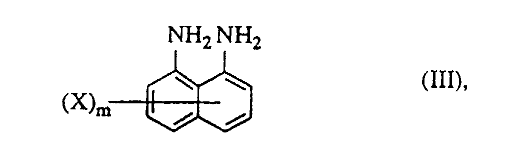 dans laquelle X et m ont la signification indiquée dans la revendication 1, à l'état fondu ou dans un solvant à des températures comprises entre 20°C et 220°C, éventuellement en présence d'un catalyseur acide et/ou sous pression.

5. Procédé de teinture dans la masse de matières synthétiques, caractérisé en ce que l'on utilise un colorant selon les revendications 1 à 3.

6. Procédé selon la revendication 5, caractérisé en ce que la matière synthétique est une matière thermoplastique.

7. Procédé selon la revendication 5 ou 6, caractérisé en ce que la matière synthétique à teindre est un polymère vinylique, en particulier un polystyrène, ou un polyester.

8. Matières synthétiques teintes selon au moins un procédé des revendications 5 à 7.
